# EUROPEAN PATENT APPLICATION

(11) **EP 1 702 946 A1**
(43) Date of publication of application: **20.09.2006**
(21) Application number: 04807141.9
(22) Date of filing: 16.12.2004
(51) Int. Cl.: C08J 9/04, B65D 65/46

(54) **BIODEGRADABLE FOAM FOR SHEET, PROCESS FOR PRODUCING THE SAME, BIODEGRADABLE MOLDING FROM THE FOAM AND PROCESS FOR PRODUCING THE SAME**

(30) Priority: 19.12.2003 JP 2003422501
(71) Applicant: Eco-Well Co., Ltd, Kumamoto-shi, Kumamoto 8600811 (JP)
(72) Inventor: KITAMURA, Shuushi, Kobe-shi, Hyogo 6580082 (JP)
(74) Representative: Staudt, Hans-Peter
(86) International application number: PCT/JP2004/018782
(87) International publication number: WO 2005/059014

(57) **Abstract**

A biodegradable foam that excels in biodegradability, moldability and heat resistance and that even when utilized in food package containers, etc., ensures high safety; and a process for producing the same. There are further provided a biodegradable molding from the foam and a process for producing the same. In particular, there is provided a biodegradable foam for sheet comprising a biodegradable foam obtained by mixing together rice husk powder, starch and a biodegradable thermoplastic resin and effecting foaming of the mixture and to be molded into a sheet form, **characterized in that** the foaming is carried out at a foaming ratio of 15-fold or below. Preferably, the biodegradable foam for sheet is **characterized in that** the mixture contains 5 to 40 wt.% of rice husk powder and 5 to 30 wt.% of starch. Further, it is preferred that the biodegradable thermoplastic resin be a mixture of two or more resin components with different melting points, and especially preferred that the extensity of resin with low melting point be greater than that of resin with high melting point.

## Description

### TECHNICAL FIELD

The present invention relates to a biodegradable foam for sheet, a process for producing the same, a biodegradable molding from the foam and a process for producing the same. More specifically, this invention relates to a biodegradable foam for sheet with excellent biodegradability and moldability using plant fiber such as rice husk powder, and a thermoplastic resin with biodegradability, a process for producing the same, a biodegradable molding from the foam and a process for producing the same.

### RELATED ART

Conventionally, plastic moldings have frequently been used as packaging containers for food products or the like, and thus, environmental problems in waste processing or the like have been caused.
To solve the problems, moldings with biodegradability have been promoted to be developed as environment-friendly materials. Polylactic acid, succinate polymer such as polyethylene succinate and polybutylene succinate, polycaprolactone, polyhydroxyalkanoate such as polyhydroxypropionate, polyhydroxybutyrate, and polyhydroxyvalerate, and copolyester which is aliphatic polyester with a main chain comprising an aromatic component, have been developed.

At the same time, for the plant fiber such as rice husks, a large amount of wastes are daily generated, and problems related to waste processing become prominent.
In Patent Document 1 described below, a foam using rice husks is proposed in order to make efficient use of such rice husks. In particular, crushed rice husks obtained by crushing dried rice husks into such size as to pass through a sieve of 40 mesh by a ball mill, alpha starch as a plant binder, water, ammonium lauryl sulfate as a surfactant, and sodium hydrogen carbonate as a foaming agent are kneaded and molded into particles, which are heated and foamed in a mold to thereby obtain a molding.
Patent Document 1:
Japanese Patent Application Laid-Open No.H07-113017

However, for the foam as disclosed in the Patent Document 1, when producing a packaging container or the like of complicated shape, small thickness, and large depth, it is difficult to produce a homogeneous container since the foam does not spread into edge portions of the container and density distribution of the foam tends to vary. Furthermore, because the surfactant is used for forming fine foams, the container is not suitable for packaging food products and the like for safety reasons.
In addition, because the alpha starch is used as a main component for keeping the shape of the foam, the foam has the disadvantage in that the water resistance and heat resistance are low when used for the container or the like.

In Patent Document 2 described below, a foam using paper is disclosed. In particular, disclosed therein is a technique of heating and kneading finely-crushed paper components, a thermoplastic resin or a plant material, and water, and thereby obtaining a molding foamed with a vapor pressure of the water. The Patent Document 2 cites synthetic resins such as polyethylene, polypropylene, polyester, and polyvinyl alcohol, and biodegradable resins such as polybutylene succinate, polybutylene succinate adipate, and polylactic acid, as the thermoplastic resin, and crushed tea-leaf, fine wood powder, and starch, as the plant material.
Patent Document 2:
Japanese Patent Application Laid-Open No. 2000-273800

Since the foaming with water vapor as disclosed in the Patent Document 2 does not use the surfactant or the foaming agent as the Patent Document 1, it is possible to ensure the safety when used for the container or the like for a food product. Furthermore, since the biodegradable resin and plant material are used, an environment-friendly foam can be provided.
However, as the foam, there is exemplified a plate-like foam of 20mm in thickness and 100mm in width, which can be used as a cushioning material or a heat-insulating material, but, from which it is difficult to mold a complicated shape such as the container. Thus, the use of the foam is limited.
In addition, since the foam uses the paper as a main component, the foam has the problem in that it has low heat resistance.

### DISCLOSURE OF THE INVENTION

### PROBLEMS TO BE SOLVED BY THE INVENTION

In order to solve the problems as described above, an object of the present invention is to provide a biodegradable foam for sheet with excellent biodegradability, moldability and heat resistance, and with high safety when used for a packaging container or the like for a food product, a process for producing the same, a biodegradable molding from the foam and a process for producing the same.

### MEANS FOR SOLVING THE PROBLEMS

In order to solve the problems as described above, according to a first aspect of the present invention, there is provided a biodegradable foam for sheet including a biodegradable foam to be molded into a sheet, obtained by mixing rice husk powder, starch and a biodegradable thermoplastic resin and foaming the mixture thereof, wherein the foaming is carried out at an expansion ratio of 15 times or less.

According to a second aspect of the present invention, there is provided the biodegradable foam for sheet according to the first aspect, wherein the biodegradable foam for sheet contains 5 to 40 % wt.% of rice husk powder and 5 to 30 wt.% of starch.

According to a third aspect of the present invention, there is provided the biodegradable foam for sheet according to the first or second aspect, wherein the biodegradable thermoplastic resin is obtained by mixing two or more resin components with different melting points.

According to a fourth aspect of the present invention, there is provided the biodegradable foam for sheet according to the third aspect, wherein, in the biodegradable thermoplastic resin, a resin with a low melting point has higher extensibility than a resin with a high melting point.

According to a fifth aspect of the present invention, there is provided a process for producing the biodegradable foam for sheet according to any one of the first to fourth aspects, including the steps of mixing rice husk powder, starch, a biodegradable thermoplastic resin, and water, and extrusion-foaming the mixture thereof.

According to a sixth aspect of the present invention, there is provided a biodegradable molding, obtained by molding the biodegradable foam for sheet according to any one of the first to fourth aspects into a sheet.

According to a seventh aspect of the present invention, there is provided a biodegradable molding, obtained by molding the biodegradable foam for sheet according to any one of the first to fourth aspects into a sheet, and then, re-molding the sheet to form a packaging container.

According to an eighth aspect of the present invention, there is provided a process for producing the biodegradable molding according to the seventh aspect, including the steps of molding the biodegradable foam for sheet into a sheet, and then, heating and pressurizing the sheet to produce a packaging container.

### EFFECTS OF THE INVENTION

In the first aspect of the present invention, since the foam contains the rice husk powder, the starch and the biodegradable thermoplastic resin as the main constituent materials, the biodegradable foam to be molded into the sheet has excellent biodegradability and high safety when used for the container for a food product or the like. By controlling the expansion ratio to 15 times or less for the biodegradable foam, it is possible to provide the foam with better moldability into the sheet, and furthermore, with better re-moldability when processed to another molding from the sheet, when compared with a foam foamed at the conventional high expansion ratio of about 20 to 40 times.
Specifically, by using the rice husk powder, it is possible to improve the heat resistance of the foam and at the same time, to make efficient use of the rice husks which are presently wasted in large quantities in Japan.

In the second aspect of the present invention, the use of the starch with low heat resistance is minimized, and the rice husk powder is used as the main component. Therefore, for example when using the plant fiber with high heat resistance containing silica such as the rice husks, the foam with excellent heat resistance can be provided, that is, the foam utilizing the characteristics of the plant fiber can be provided.
In particular, when the rice husk powder is less than 5 wt.%, the heat resistance decreases, and when the rice husk powder is more than 40 wt.%, binding capacity between contained materials decreases, and thus, weakness increases. When the starch is less than 5 wt.%, the amount of the contained biodegradable thermoplastic resin increases, and it costs more to produce the foam and molding. On the other hand, when the starch is more than 30 wt.%, moldability in re-molding of the foam decreases, and the heat resistance decreases as well.

In the third aspect of the present invention, since the biodegradable thermoplastic resin is obtained by mixing two or more resin components with different melting points, the excellent moldability can be ensured even when a temperature for molding the foam is different from a temperature for re-molding the same foam.
Especially when the foam is molded, it is preferable to use a resin that retains adequate viscosity at a high temperature since a foam of good quality can be formed by foaming at a higher temperature than the boiling temperature of water when foaming with water vapor as described below is used. On the other hand, a metal mold or the like is typically used in the re-molding, and thus, when the foam is pressurized and molded at a high temperature, it is difficult to obtain a homogeneous molding due to distortion of the metal mold or inhomogeneous temperature distribution. Therefore, it is preferable to mix a resin that dissolves at a relatively low temperature.

In the fourth aspect of the present invention, in the biodegradable thermoplastic resin, the resin with a low melting point has higher extensibility than the resin with a high melting point. Therefore, when re-molding the foam by the metal mold or the like, the moldability is improved.
In addition, by mixing the plurality of resins with different characteristics as described in the third or fourth aspect of the present invention, the foam is allowed to have complex characteristics, which is difficult to achieve with a single biodegradable thermoplastic resin.

In the fifth aspect of the present invention, in the process for producing the biodegradable foam for sheet, the foaming with water vapor is used. Therefore, the foam can be provided without using a foaming agent or a surfactant, and it is also possible to ensure high safety when the foam is used for the container for a food product or the like.

In the sixth aspect of the present invention, the biodegradable foam for sheet according to any one of the first to third aspects of the present invention is the foam with excellent re-moldability. By molding the foam, it is possible to obtain the biodegradable molding utilizing the excellent characteristics of the foam such as biodegradability and heat resistance.
Particularly, since the biodegradable molding is sheet-shaped, the molding can be used as an intermediate in the production of molding of various shape such as the packaging container. In addition, the molding can be easily produced by using a hot press machine used for producing the conventional molding. Furthermore, by positioning a molding machine such as a roller behind the production process of the foam, the foam can be easily molded into the sheet by using the remaining heat of the foam.

In the seventh aspect of the present invention, the biodegradable molding is molded into the packaging container. Therefore, it is possible to provide the outstanding packaging container utilizing the excellent characteristics of the foam related to the present invention, such as biodegradability, heat resistance, moldability and safety.

In the eighth aspect of the present invention, when a complicated biodegradable molding such as the packaging container is to be produced, the biodegradable foam is molded into the sheet, and then, the sheet is re-molded by heating and pressurizing. The hot press machine used for producing the conventional molding can be thereby used to easily produce the complicated molding. In addition, since the foam is molded into the sheet in which homogeneous density is easily obtained, it is possible to easily obtain the homogeneous molding, even when the molding is of complicated shape, only by heating and pressurizing the sheet.

### DETAILED DESCRIPTION OF THE INVENTION

A biodegradable foam for sheet, a process for producing the same, a biodegradable molding from the foam and a process for producing the same according to the present invention are described below in detail.
The biodegradable foam for sheet according to the present invention contains rice husk powder, starch, and a biodegradable thermoplastic resin as main components. As the component composition, the biodegradable foam for sheet contains 5 to 40 wt.% of rice husk powder and 5 to 30 wt.% of starch, and other composition of the foam is the biodegradable thermoplastic resin.
When the rice husk powder is 5 wt.% or less, more starch and biodegradable thermoplastic resin are needed, and thus, there occurs the problem that it costs more to produce the biodegradable foam and the mechanical strength thereof decreases. On the other hand, when the rice husk powder is more than 40 wt.%, a complicated molding cannot be formed since the foamability and extensibility are reduced. Furthermore, there occurs the problem that cracks are easily generated and the weakness increases.
When the starch is 5 wt.% or less, more biodegradable thermoplastic resin is needed and it costs more to produce the biodegradable foam. Furthermore, the binding capacity to the rice husk powder decreases and the weakness increases. On the other hand, when the starch is more than 30 wt.%, the moldability in re-molding of the foam decreases and at the same time, the heat resistance and water resistance are reduced, with the result that the use of the foam is limited.

Plant fiber such as the rice husk powder can be utilized as a filler for the foam and molding, and also can add various characteristics such as biodegradability, bactericidal properties and heat resistance to the foam and molding.
As the plant fiber, plant seed, leaf, stem and stock, or skin can be used. Especially, it is preferable to use wastes such as seed husks and squeezed residuum, as useful resources. For example, a husk or a skin of a grain kernel such as rice, wheat, buckwheat, and soybean, a husk of a coffee berry or a peanut, and a skin of fruit, such as a chestnut, an orange, an apple, and a pear, and squeezed residue thereof can be used.
Especially in the present invention, it is preferable to use the rice husk including silica capable of increasing the heat resistance, as the plant fiber.

The starch acts as a foaming material constituting the foam and also acts as the filler. At the same time, the starch has good binding capacity to the plant fiber and therefore, can act as a binder for binding the plant fiber.
Raw starch obtained from corn, wheat, rice plant, and potato, or starch with a controlled gelatinization degree can be used as the starch in the present invention.

The biodegradable thermoplastic resin is used to improve the mechanical strength of the foam and at the same time, to improve the heat resistance and water resistance thereof and give extensibility which is essential in the moldability.
As the biodegradable thermoplastic resin, polylactic acid, succinate polymer such as polyethylene succinate and polybutylene succinate, polycaprolactone, polyhydroxyalkanoate such as polyhydroxypropionate, polyhydroxybutyrate, and polyhydroxyvalerate, and copolyester which is aliphatic polyester with a main chain comprising an aromatic component, can be used.

In order to particularly improve the heat resistance of the foam and molding, a resin having the characteristic of a high melting point of 160°C or more, and preferably of 170°C or more, is used as the biodegradable thermoplastic resin of the present invention. However, the resin with a high melting point generally has low extensibility, and thus, has low moldability. In order to solve the problem, a resin having an extension percentage of 100% or more, and preferably of 500% or more, is used. Here, it is preferable that the melting point is 90°C or more, and preferably 100°C or more. The resin with a low melting point has low heat resistance, and also, when the resin with a low melting point is heated to a temperature (for example, around 170 to 200°C) by which an adequate vapor pressure is obtained in foaming with water vapor, adequate viscosity cannot be obtained to cause poor extrusion from an extruder or lower the moldability of the foam.

Therefore, two or more different biodegradable thermoplastic resins each with an appropriate melting point and extensibility are mixedly used for the biodegradable foam for sheet according to the present invention.
The mixing ratio of the resin with a high melting point and the resin with a low melting point but with a high extension percentage may be arbitrarily determined in view of the heat resistance and moldability of the biodegradable molding. However, when, for example, the heat resistance is to be improved, it is preferable that the resin with a low melting point is less than a total weight of the resin with a high melting point, preferably less than half the total weight, and more preferably less than one third the total weight.
In addition, in the process for producing the biodegradable foam for sheet according to the present invention, the foaming with water vapor is used and an expansion ratio is low, i.e., 15 times or less, as described below. Therefore, it is preferable to use a biodegradable thermoplastic resin having water vapor permeability in order to release the water vapor inside of the foam to an outside thereof after foaming.

Next, the process for producing the biodegradable foam for sheet is described.
The rice husk is dried and crushed to have an average particle diameter of 1 mm or less and preferably of 500 µm or less by a ball mill or the like. Although the particle size of 1 mm or more may be used, it is preferable to process the rice husk to fine powder when a molding of complicated shape is to be formed.
The crushed rice husk powder, starch and biodegradable thermoplastic resin are put into an extruder, and then, water is fed thereinto for performing the foaming with water vapor. In the extruder, these materials are heated and kneaded, and extruded from a die portion of the extruder. While extruded, the obtained material is foamed, and the biodegradable foam for sheet is thereby formed.

The expansion ratio of the biodegradable foam for sheet is 15 times or less, and preferably 10 times or less.
When the expansion ratio is more than 15 times, a homogeneous molding cannot be obtained because the density tends to be variable within the molding obtained by re-molding the foam. In other words, in the foam itself, the material density of an outer surface is generally higher than the inner material density. When the foam is compressed, the foam cannot be molded to have homogeneous density and thickness. Also, there is air inside the foam, and the inside air is not fully released to an outside of the foam when compressed. Thus, a bubbly molding is likely to be formed.
In addition, when the expansion ratio is extremely low, more material needs to be used and it costs more to produce the foam.

In the process for producing the biodegradable foam for sheet according to the present invention, the expansion ratio can be controlled by the amount of water fed into the extruder, and since a surfactant such as ammonium lauryl sulfate is not used, it is possible to produce the high-safety biodegradable foam for sheet which can be used for a container or the like for a food product. In addition, in the process for producing the biodegradable foam for sheet according to the present invention, a safe chemical from a food hygiene perspective may be used if necessary. For example, sodium hydrogen carbonate may be used as a foaming agent.

Next, the molding from the biodegradable foam for sheet is described.
Since the biodegradable foam for sheet according to the present invention has excellent re-moldability, the foam is further molded and processed to obtain the biodegradable molding utilizing the excellent characteristics of the foam such as the biodegradability and heat resistance.
The molding can be used as various disposable moldings such as packaging containers for food products, plastic moldings or paper moldings for vehicles and electronic products. In particular, a sheet-shaped molding obtained by heat-molding and pressure-molding the foam into a sheet can be used as an intermediate to re-mold the sheet to mold the packaging container or the like. The useful molding can be thereby provided.

Next, the process for producing the molding from the biodegradable foam for sheet is described.
The biodegradable foam for sheet according to the present invention may be processed to a chip, and heat-molded and pressure-molded in a metal mold, but it is difficult to control the foam so as to spread homogeneously within the molding. Thus, the foam is firstly heated and pressurized, to form the sheet-shaped molding. The sheet is then pressure-molded by a heated metal mold to produce the molding such as the packaging container.

For producing the sheet-shaped molding, such methods may be used as a method of cutting the biodegradable foam for sheet to predetermined length pieces after producing the biodegradable foam for sheet, gathering a plurality of the foams, fusing the plurality of foams by a hot press roller, and molding them into the sheet, and a method of extruding the biodegradable foam from the extruder while guiding a plurality of foams into a press roller, and molding them into the sheet. In the latter method, the press roller may be heated if necessary.
In addition, the shape of the foam is not limited to a cylindrical shape, but a rectangular-solid plate-like foam may be formed to be molded into the sheet by the press roller.

When obtaining the molding such as the packaging container from the sheet-shaped molding, the molding can be easily obtained by guiding the sheet into a hot press machine, and heat-molding and pressure-molding the sheet by a metal mold of desired shape. Furthermore, when pressure-molding the sheet by the metal mold, punch processing may be performed together to punch out the molding such as the packaging container from the sheet.
As such hot press machine, a hot press machine used for producing a molding from the conventional synthetic resin sheet may be used. Therefore, a production process utilizing the conventional facilities can be designed.

### [Examples]

20 wt.% of dried and crushed rice husk powder (made by Nakanihon Sanshou Co., Ltd.: 80 to 150 meshes) as the plant fiber, 10 wt.% of cornstarch (made by Nihon Starch Co., Ltd) as the starch, 60 wt.% of Biomax4024 (made by Du Pont Kabushiki Kaisha) which is copolyester with a melting point of 200°C and 10 wt.% of Ecoflex (made by BASF Japan Ltd.) with a melting point of 105 to 115°C and an extension percentage of 800 % as the biodegradable thermoplastic resin were kneaded by a twin screw extruder (made by The Japan Steel Works, Ltd.). At the same time, water was added in an amount of 10 wt.% with respect to the total weight of the mixture. While keeping the kneading temperature at 170 to 200°C, the mixture was extruded from a die portion (an opening of 3 mm in diameter) of the extruder and at the same time, foamed with water vapor to obtain a biodegradable foam for sheet (cylindrical).
The expansion ratio of an Example 1 described above was 5 times.
The expansion ratio was measured by dividing the density of the non-foamed material by the density of the foam.

Following the foaming with water vapor described above, a plurality of biodegradable foams for sheet were carried side-by-side, and molded into a sheet of 20 cm in width and 30 cm in length by a press roller (made by Yoshimura kikai Co., Ltd.: a roller gap is 3 to 5 mm).
The sheet-shaped molding was heated and pressurized at a temperature of 120 to 200°C by a hot press machine (made by Yoshimura kikai Co., Ltd.), and a container of 9 cm in width, 15 cm in length, and 1.5 cm in depth was molded to obtain the molding of the Example 1.

The same materials and production process as those of the Example 1 were used, except that a pressure inside the extruder was adjusted by varying the weight percent of the added water in a range of 10 to 15 wt.%. Biodegradable foams with expansion ratios of 10 times, 15 times, and 20 times were thereby obtained, which were molded to obtain container moldings of an Example 2 (the expansion ratio of 10 times), an Example 3 (the expansion ratio of 15 times), and a Comparative Example(the expansion ratio of 20 times).

Next, a container molding of an Example 4 was obtained by using the production process described in the Example 1 except that 40 wt.% of rice husk powder, 10 wt.% of cornstarch, 40 wt.% of Biomax4024, and 10 wt.% of Ecoflex were used.

In addition, a container molding of an Example 5 was obtained by using the production process described in the Example 1 except that 20 wt.% of rice husk powder, 30 wt.% of cornstarch, 40 wt.% of Biomax4024, and 10 wt.% of Ecoflex were used.

Next, test and evaluation methods for the moldings of the Examples 1 to 5 and the Comparative Example are described.

### (Test and Evaluation of Sheet Molding)

The sheet-shaped moldings obtained in the course of producing the biodegradable moldings of the Examples 1 to 5 and the Comparative Example were visually observed and evaluated on a scale of one to three as follows.
- ○:: molding with no crack or no foam expansion
- Δ:: molding with cracks or foam expansions in less than 10% of its entire area
- ×:: molding with cracks or foam expansions in 10% or more of its entire area

### (Test and Evaluation of Adhesiveness)

Like the test and evaluation of sheet molding, the sheet-shaped moldings related to the Examples 1 to 5 and the Comparative Example were visually observed and evaluated on a scale of one to two as follows.
- ○:: molding in which respective cylindrical foams are difficult to be separated
- ×:: molding in which respective cylindrical foams can be separated in one portion of the sheet-shaped molding

### (Test and Evaluation of Solid Molding)

For the biodegradable moldings of the Examples 1 to 5 and the Comparative Example, the molded containers were visually observed and evaluated on a scale of one to three as follows.
- ○:: molding with no crack
- Δ:: molding with cracks in one portion of its bottom curve
- ×:: molding with many cracks over the entire molding

### (Test and Evaluation of Heat Resistance and Water Resistance)

For the biodegradable moldings of the Examples 1 to 5 and the Comparative Example, the molded containers were put into a steamer and removed therefrom after 30 minutes, and then, changes from the former moldings were visually observed and evaluated on a scaled of one to three as follows.
- ○:: molding with no shape change
- △:: molding in which less than 10% of its entire area is changed in shape
- ×:: molding in which 10 % or more of its entire area is changed in shape

With respect to the Examples 1 to 5 and the Comparative Example, the results of the tests and evaluations for the sheet moldability, adhesiveness, solid moldability, and heat resistance and water resistance are shown in Table 1.

**Table 1**

| Sample | Sheet Moldability | Adhesi veness | Solid Moldability | Heat Resistance |
|---|---|---|---|---|
| Example 1 | ○ | ○ | ○ | ○ |
| Example 2 | ○ | ○ | ○ | ○ |
| Example 3 | ○ | ○ | ○ | ○ |
| Comparative Example | × | ○ | △ | ○ |
| Example 4 | ○ | ○ | △ | ○ |
| Example 5 | ○ | ○ | △ | △ |

As shown in Table 1, the Examples 1 to 3 show excellent characteristics with respect to the sheet moldability, adhesiveness, solid moldability, and heat resistance. However, in the Comparative Example in which the biodegradable foam for sheet has the expansion ratio of over 15 times, there are generated foam expansions all over the molding when forming the sheet-shaped molding, and the container is not constant in thickness and there are generated cracks in some portions having high extension percentage when forming the solid molding.
In the Example 4 in which 40 wt.% of rice husk powder is contained, the entire container is fragile and there are easily generated cracks when forming the sold molding.
In the Example 5 in which 30 wt.% of cornstarch is contained, there are generated cracks in one portion when forming the solid molding, and also, the container is changed in shape in one portion in the test of heat resistance and water resistance, and it is found that enough heat resistance and water resistance is not obtained.

Although the sheet-shaped molding is formed from the cylindrical biodegradable foam in the Examples as described above, similar results as those of the above Examples were obtained by altering the die shape of the extruder and forming the rectangular-solid foam to form the sheet-shaped molding and the container molding as described above, and performing similar tests as the tests described above.
Therefore, it can be understood that both the cylindrical foam and the rectangular-solid foam can be used.

Although the Examples 4 and 5 has low solid moldability, heat resistance and water resistance, these characteristics may be improved by attaching a laminate film or the like on a surface of the molding to complex the material of the container.

The biodegradable foam for sheet according to the present invention is not limited to the foam containing the rice husk powder, the starch and the biodegradable thermoplastic resin as described above, but rather, various additives, such as a coloring agent like edible red and silicon oxide, and an antibacterial agent, may be added if necessary, to form a multifunctional molding.

As described above, in the present invention, there are provided the biodegradable foam for sheet with excellent biodegradability, moldability and heat resistance, and with high safety even when used for the container or the like for a food product, the process for producing the same, the biodegradable molding from the foam and the process for producing the same.

## Claims

1. A biodegradable foam for sheet comprising a biodegradable foam to be molded into a sheet, obtained by mixing rice husk powder, starch and a biodegradable thermoplastic resin and foaming a mixture thereof, wherein
the foaming is carried out at an expansion ratio of 15 times or less.

2. The biodegradable foam for sheet according to Claim 1, wherein
the biodegradable foam for sheet contains 5 to 40 wt.% of rice husk powder and 5 to 30 wt.% of starch.

3. The biodegradable foam for sheet according to Claim 1 or 2, wherein
the biodegradable thermoplastic resin is obtained by mixing two or more resin components with different melting points.

4. The biodegradable foam for sheet according to Claim 3, wherein
in the biodegradable thermoplastic resin, a resin with a low melting point has higher extensibility than a resin with a high melting point.

5. A process for producing the biodegradable foam for sheet according to any one of Claims 1 to 4, comprising the steps of
mixing rice husk powder, starch, a biodegradable thermoplastic resin, and water, and
extrusion-foaming a mixture thereof.

6. A biodegradable molding, obtained by molding the biodegradable foam for sheet according to any one of Claims 1 to 4 into a sheet.

7. A biodegradable molding, obtained by molding the biodegradable foam for sheet according to any one of Claims 1 to 4 into a sheet, and then, re-molding the sheet to form a packaging container.

8. A process for producing the biodegradable molding according to Claim 7, comprising the steps of
molding the biodegradable foam for sheet into a sheet, and
heating and pressurizing the sheet to produce a packaging container.
